# EUROPÄISCHE PATENTANMELDUNG

(11) **EP 4 494 807 A1**
(43) Veröffentlichungstag der Anmeldung: **22.01.2025**
(21) Anmeldenummer: 24186589.8
(22) Anmeldetag: 04.07.2024
(51) Int. Cl.: B23Q 3/08, B25B 11/00

(54) **SPANNVORRICHTUNG SOWIE SPANNSYSTEM UMFASSEND EINE SPANNVORRICHTUNG UND EINE KONSOLE**

(30) Priorität: 17.07.2023 DE 102023118806
(71) Anmelder: J. Schmalz GmbH, 72293 Glatten (DE)
(72) Erfinder: Conzelmann, Timo, 72293 Glatten (DE); Dieterle, Moritz, 72250 Freudenstadt (DE); Stockburger, Ralf, 72293 Glatten (DE)
(74) Vertreter: DREISS Patentanwälte PartG mbB

(57) **Zusammenfassung**

Die Erfindung betrifft eine Spannvorrichtung (10) zum Spannen eines Werkstücks, umfassend wenigstens ein druckluftbetätigtes Spannelement (12, 14), welches zum Spannen des Werkstücks entlang einer Spannachse (30) verstellbar ist, einen Druckluftanschluss (36) zur Versorgung des wenigstens einen Spannelements (12, 14) mit Druckluft, eine unterdruckgesteuerte Ventileinrichtung (38), welche dazu ausgebildet ist, in Abhängigkeit eines an der Ventileinrichtung anliegenden Unterdrucks eine Strömungsverbindung zwischen dem Druckluftanschluss und dem wenigstens einen Spannelement wahlweise freizugeben oder abzusperren, und wenigstens einen Unterdruckanschluss (58-1, 58-2) zur Versorgung der Ventileinrichtung mit Unterdruck. Die Erfindung betrifft auch ein Spannsystem, umfassend eine solche Spannvorrichtung und eine Konsole. Die Erfindung betrifft auch eine Konsole zur Verwendung in einem solchen Spannsystem.

## Beschreibung

Die Erfindung betrifft eine Spannvorrichtung sowie ein Spannsystem umfassend eine solche Spannvorrichtung und eine Konsole, auf welche die Spannvorrichtung aufsetzbar ist.

Spannsysteme mit Konsole und darauf angeordneter Spannvorrichtung sind aus dem Stand der Technik bekannt, beispielsweise aus der DE 199 38 851 B4. Derartige Spannsysteme kommen beispielsweise bei der spanenden oder materialabtragenden Bearbeitung von Werkstücken wie Holzwerkstoffen oder Kunststoffwerkstoffen oder Ähnlichem zum Einsatz, insbesondere dann, wenn die Werkstücke von mehreren Seiten bearbeitet werden müssen. Durch Positionieren der Spannvorrichtung auf der Konsole ist ein Spannen unterschiedlicher Werkstücke möglich.

Aus der DE 10 2014 218 841 A1 ist zudem eine Spannvorrichtung mit einem druckluftbetätigten Spannelement bekannt, welches zum Spannen eines Werkstücks entlang einer Spannachse verlagerbar ist.

Bei den bekannten Spannvorrichtungen sind üblicherweise handbetätigte Schalter vorgesehen, über welche eine Bedienperson eine Spannwirkung bedarfsweise ein- oder ausschalten kann, bspw. eine Druckluftversorgung zu- oder abschalten kann. Dies ist jedoch oftmals in der Bedienung umständlich und macht den Einsatz einer Bedienperson in unmittelbarer Nähe des Spannsystems erforderlich. Weiteres Verbesserungspotential besteht bei den bekannten pneumatisch betriebenen Spannsystemen in der Zufuhr der Betriebsfluide über Schläuche, welche bei der Handhabung oftmals Störkonturen bilden und somit ebenfalls regelmäßig das Eingreifen einer Bedienperson während des Betriebs erfordern.

Der Erfindung liegt die Aufgabe zugrunde, bei Spannsystemen mit Spannvorrichtung eine Bedienbarkeit zu verbessern. Insbesondere soll ein automatisierter Betrieb ermöglicht werden.

Diese Aufgabe wird erfindungsgemäß durch eine Spannvorrichtung mit den Merkmalen des Anspruchs 1 gelöst. Hierbei handelt es sich um eine pneumatische betätigte Spannvorrichtung, insbesondere druckluftbetätigte Spannvorrichtung. Die Spannvorrichtung ist insbesondere zum Aufsetzen auf eine Konsole eines Spannsystems ausgebildet (nachfolgend noch im Detail erläutert).

Die Spannvorrichtung ist zum Spannen und somit Fixieren eines Werkstücks ausgebildet. Die Spannvorrichtung umfasst wenigstens ein druckluftbetätigtes Spannelement. Das Spannelement ist durch Beaufschlagung mit Druckluft entlang einer Spannachse verlagerbar. Beispielsweise ist es denkbar, dass die Spannvorrichtung eine pneumatisch betriebene Spannkolbenstange umfasst, an welcher das Spannelement angeordnet ist und welche entlang der Spannachse verfahrbar ist. Vorzugweise ist die Spannvorrichtung derart ausgebildet, dass verschiedene Spannbereiche realisierbar sind.

Die Spannvorrichtung umfasst außerdem einen Druckluftanschluss zur Versorgung des wenigstens einen Spannelements mit Druckluft. Der Druckluftanschluss ist insbesondere zum Anschluss an eine externe Druckluftversorgung ausgebildet, vorzugsweise zur Strömungsverbindung mit einem Druckluftauslass einer Konsole (nachfolgend noch näher erläutert).

Die Spannvorrichtung umfasst außerdem eine unterdruckgesteuerte Ventileinrichtung zum Schalten einer Strömungsverbindung zwischen dem Druckluftanschluss und dem wenigstens einen Spannelement. Die Ventileinrichtung ist insofern insbesondere dazu ausgebildet, das wenigstens eine Spannelement bedarfsweise zu aktivieren oder zu deaktivieren. Im Konkreten ist die Ventileinrichtung dazu ausgebildet, in Abhängigkeit eines an der Ventileinrichtung anliegenden Unterdrucks eine Strömungsverbindung zwischen dem Druckluftanschluss und dem wenigstens einen Spannelement wahlweise freizugeben oder abzusperren. Die Ventileinrichtung ist insofern durch Unterdruck betätigbar.

Die Spannvorrichtung umfasst außerdem wenigstens einen Unterdruckanschluss zur Versorgung der Ventileinrichtung mit Unterdruck (und somit zur Ansteuerung bzw. Betätigung der Ventileinrichtung). Der Unterdruckanschluss ist insbesondere zum Anschluss an eine externe Unterdruckversorgung ausgebildet, insbesondere zur Strömungsverbindung mit einem Unterdruckauslass einer Konsole (nachfolgend noch näher erläutert) .

Eine solche Spannvorrichtung mit unterdruckbetätigter Ventileinrichtung ermöglicht es, eine Spannwirkung des wenigstens einen Spannelements durch Zu- oder Abschalten von Unterdruck zu steuern. Dies ist insbesondere für einen automatisierten Betrieb vorteilhaft, da es ermöglicht, die Spannvorrichtung zu aktivieren, ohne dass eine Bedienperson an der Spannvorrichtung einen Schalter betätigen muss. Beispielsweise ist es denkbar, die Spannvorrichtung durch Zu- oder Abschalten eines die Spannvorrichtung mit Unterdruck versorgenden Unterdruckkreis zu steuern. Dies schließt jedoch nicht aus, dass an der Spannvorrichtung zusätzlich Taster oder Handschalter angeordnet sind.

Die Ventileinrichtung kann in ein Basisteil bzw. Grundkörper oder Gehäuse der Spannvorrichtung integriert sein. Es ist auch denkbar, dass die Ventileinrichtung ein eigenes Ventilgehäuse aufweist, welches an einem Gehäuse der Spannvorrichtung angeordnet ist. Der wenigstens Unterdruckanschluss und der Druckluftanschluss können an dem Grundkörper oder an dem Ventilgehäuse angeordnet sein. Der wenigstens eine Unterdruckanschluss und der Druckluftanschluss können an einem Basisabschnitt der Spannvorrichtung angeordnet sein, mittels welcher die Spannvorrichtung auf eine Konsole aufsetzbar ist (siehe unten).

Im Rahmen einer vorteilhaften Ausgestaltung kann die Ventileinrichtung wenigstens ein unterdruckbetätigtes Stellglied aufweisen, welches zwischen einer Sperrstellung und einer Freigabestellung verstellbar ist, insbesondere innerhalb eines Ventilgehäuses der Ventileinrichtung verlagerbar geführt ist. Das wenigstens eine Stellglied ist insbesondere derart ausgebildet, dass in der Sperrstellung eine Strömungsverbindung zwischen dem Druckluftanschluss und dem Spannelement abgesperrt ist und in der Freigabestellung diese Strömungsverbindung freigegeben ist. Das Stellglied ist insbesondere durch Beaufschlagung mittels Unterdruck aus der Sperrstellung in die Freigabestellung überführbar oder umgekehrt. Mit anderen Worten ist das wenigstens eine Stellglied durch Beaufschlagung mittels Unterdruck insbesondere schaltbar.

Bei einer Mehrzahl von druckluftbetätigten Spannelementen kann die Ventileinrichtung insbesondere dazu ausgebildet sein, eine Druckluftversorgung der einzelnen Spannelemente voneinander unabhängig zu steuern, insbesondere eine jeweilige Strömungsverbindung zwischen dem Druckluftanschluss und den Spannelementen voneinander unabhängig freizugeben oder abzusperren.

Eine vorteilhafte Realisierungsform kann bspw. darin bestehen, dass für jedes druckluftbetätigte Spannelement ein eigenes unterdruckbetätigtes Stellglied in der Ventileinrichtung vorgesehen ist. Insofern kann die Ventileinrichtung eine der Anzahl an druckluftbetätigten Spannelementen entsprechende Anzahl an Stellgliedern aufweisen. Die Stellglieder können entlang zueinander parallel verlaufender Schaltachsen in einem Ventilgehäuse der Ventileinrichtung geführt sein.

In vorteilhafter Weise kann jedes Stellglied über einen eigenen Unterdruckanschluss mit Unterdruck versorgbar sein. Insbesondere umfasst die Spannvorrichtung eine der Anzahl an druckluftbetätigten Spannelementen, insbesondere der Anzahl an Stellgliedern, entsprechende Anzahl an Unterdruckanschlüssen. Es ist auch denkbar, dass die Spannvorrichtung einen gemeinsamen Unterdruckanschluss aufweist, welcher über ein Unterdruckverteilersystem mit den Stellgliedern strömungsverbunden ist.

Im Rahmen einer vorteilhaften Weiterbildung kann die Ventileinrichtung derart ausgebildet sein, dass dann, wenn an der Ventileinrichtung kein Unterdruck anliegt (bspw. nach Abschalten der einer externen Unterdruckversorgung), eine Druckluftversorgung des wenigstens einen Spannelements unterbunden ist. Insbesondere kann die Spannvorrichtung derart ausgebildet sein, dass beim Abschalten der Unterdruckversorgung ein eingespanntes Werkstück gelöst wird. Eine mögliche Realisierungsform kann darin bestehen, dass das wenigstes eine Stellglied in die Sperrstellung derart beaufschlagt ist, bspw. federbeaufschlagt ist, dass es bei Wegfall der Unterdruckbeaufschlagung durch die Beaufschlagung, bspw. Federbeaufschlagung, in die Sperrstellung überführt wird.

Alternativ oder zusätzlich ist es aber auch denkbar, dass eine Feststelleinrichtung vorgesehen ist, welche dazu ausgebildet ist, das Stellglied in der Freigabestellung zu arretieren. Eine solche Ausgestaltung ermöglicht es, eine Werkstückspannung auch nach Abschalten des Unterdrucks aufrechtzuerhalten.

Im Rahmen einer vorteilhaften Weiterbildung kann das wenigstens eine Stellglied als Ventilkolben ausgebildet sein, welcher in einem Kolbenraum verschiebbar geführt ist. Der Kolbenraum kann insbesondere in einem Ventilgehäuse der Ventileinrichtung vorgesehen sein. Der Kolbenraum kann insbesondere mit dem wenigstens einen Unterdruckanschluss strömungsverbunden sein. Insofern kann der Kolbenraum über den wenigstens einen Unterdruckanschluss mit Unterdruck versorgbar sein. Insbesondere kann der Kolbenraum stirnseitig eine Unterdruckkammer aufweisen, welche mit einem Unterdruckanschluss strömungsverbunden ist. Eine solche Ventileinrichtung mit Ventilkolben ist konstruktiv einfach aufgebaut und zudem in der Funktion zuverlässig. Wie vorstehend erwähnt, kann bei einer Ausgestaltung mit mehreren Stellgliedern jedes Stellglied in einem eigenen Kolbenraum angeordnet sein. Insbesondere kann jeder Kolbenraum mit einem eigenen Unterdruckanschluss strömungsverbunden sein.

Vorzugsweise ist das wenigstens eine druckluftbetätigte Spannelement (oder sind die druckluftbetätigten Spannelement jeweils) über ein Druckluftverteilersystem mit dem Kolbenraum strömungsverbunden. Darüber hinaus ist es vorteilhaft, wenn der Druckluftanschluss über einen Druckluftzufuhrkanal mit dem Kolbenraum strömungsverbunden ist. Insbesondere münden das Druckluftverteilersystem und der Druckluftzufuhrkanal jeweils über eine Mündungsöffnung in den Kolbenraum ein. In vorteilhafter Weise kann die Ventileinrichtung derart ausgebildet sein, dass in der Sperrstellung des Ventilkolbens die Mündungsöffnung des Druckluftverteilersystems und die Mündungsöffnung des Druckluftzufuhrkanals durch einen Sperrabschnitt des Ventilkolbens verschlossen sind, sodass das Druckluftverteilersystem und der Druckluftanschluss voneinander fluidisch getrennt sind. Darüber hinaus kann es vorteilhaft sein, wenn der Ventilkolben einen Freigabeabschnitt aufweist, in welchem der Ventilkolben gegenüber dem Sperrabschnitt radial verjüngt ist. Insbesondere wirkt der Ventilkolben in der Freigabestellung mit diesem Freigabeabschnitt mit der Mündungsöffnung des Druckluftverteilersystems und der Mündungsöffnung des Druckzufuhrkanals derart zusammen, dass eine Strömungsverbindung zwischen Druckluftverteilersystem und Druckluftzufuhrkanal hergestellt ist.

Es ist denkbar, dass die Spannvorrichtung ein einzelnes Spannelement aufweist. Es ist auch denkbar, dass die Spannvorrichtung mehrere Spannelemente aufweist. Im Rahmen einer vorteilhaften Ausgestaltung kann die Spannvorrichtung ein erstes Spannelement mit einer ersten Spannfläche und ein zweites Spannelement mit einer zweiten Spannfläche aufweisen. Insbesondere sind die erste und die zweite Spannfläche einander zugewandt, sodass das zu spannende Werkstück zwischen den Spannflächen einspannbar ist. Insbesondere sind das erstes Spannelement und das zweite Spannelement relativ zueinander entlang der Spannachse verfahrbar, insbesondere aufeinander zu.

Es ist denkbar, dass nur das erste Spannelement oder nur das zweite Spannelement ein druckluftbetätigtes Spannelement ist. Dann kann das jeweils andere Spannelement ein feststehendes Spannelement sein. Es ist auch denkbar, dass sowohl das erste als auch das zweite Spannelement ein druckluftbetätigtes Spannelement sind. Insofern können das erste Spannelement und das zweite Spannelement druckluftbetätigt entlang der Spannachse verfahrbar sein. Insbesondere können das erste Spannelement und das zweite Spannelement voneinander unabhängig entlang der Spannachse, insbesondere aufeinander zu, verfahrbar sein. Beispielsweise ist es denkbar, dass zum Spannen des Werkstücks beide Spannelemente aufeinander zu verfahrbar sind, sodass ein Abstand der ersten und zweiten Spannfläche verringert wird.

Bei einer Ausgestaltung mit einem ersten druckluftbetätigten Spannelement und einem zweiten druckluftbetätigten Spannelement kann die Ventileinrichtung insbesondere dazu ausgebildet sein, eine Strömungsverbindung zwischen dem Druckluftanschluss und dem ersten Spannelement und eine Strömungsverbindung zwischen dem Druckluftanschluss und dem zweiten Spannelement voneinander unabhängig zu steuern, insbesondere eine jeweilige Strömungsverbindung zwischen dem Druckluftanschluss und dem Spannelement wahlweise freizugeben oder abzusperren.

Eine mögliche Realisierungsform kann darin bestehen, dass die Ventileinrichtung ein erstes unterdruckbetätigtes Stellglied zum wahlweisen Absperren oder Freigeben der Strömungsverbindung zwischen dem Druckluftanschluss und dem ersten Spannelement aufweist und ein zweites unterdruckbetätigtes Stellglied zum wahlweisen Absperren oder Freigeben der Strömungsverbindung zwischen dem Druckluftanschluss und dem zweiten Spannelement. Insbesondere kann dann die Spannvorrichtung einen ersten Unterdruckanschluss zur Versorgung des ersten Stellglieds mit Unterdruck und einen zweiten Unterdruckanschluss zur Versorgung des zweiten Stellglieds mit Unterdruck aufweisen. Vorzugsweise sind der erste Unterdruckanschluss und der zweite Unterdruckanschluss voneinander fluidisch getrennt, sodass das erste Stellglieder und das zweite Stellglied voneinander unabhängig mit Unterdruck versorgbar, und somit steuerbar, sind. Mit anderen Worten ist vorzugsweise für das erste und das zweite Stellglied jeweils ein eigener Unterdruckanschluss vorgesehen. Eine solche Ausgestaltung ermöglicht es, auf einfache Weise, die Spannelement voneinander unabhängig zu betreiben, beispielsweise durch An- und Abschalten einer jeweiligen Unterdruckversorgung.

In vorteilhafter Weise kann das erste Spannelement über ein erstes Druckluftverteilersystem mit Druckluft versorgbar (und somit aktivierbar) sein und das zweite Spannelement kann über ein zweites, insbesondere von dem ersten Druckluftverteilersystem fluidisch getrenntes, Druckluftverteilersystem mit Druckluft versorgbar (und somit aktivierbar) sein. Dann kann die Ventileinrichtung dazu ausgebildet sein, eine Druckluftzufuhr von dem Druckluftanschluss zu dem ersten Druckluftverteilersystem und eine Druckluftzufuhr von dem Druckluftanschluss zu dem zweiten Druckluftverteilersystem, insbesondere voneinander unabhängig, zu steuern. Insbesondere kann jedem Druckverteilersystem ein eigenes Stellglied der Ventileinrichtung zugeordnet sein.

Im Rahmen eines allgemeinen Aspekts kann die Spannvorrichtung einen Basisabschnitt aufweisen, mit dessen Unterseite die Spannvorrichtung auf eine Konsole eines Spannsystems aufgesetzt werden kann. Der Basisabschnitt kann Teil eines Basisteils (Grundkörper) der Spannvorrichtung sein.

In vorteilhafter Weise können der Druckluftanschluss und der wenigstens eine Unterdruckanschluss an der Unterseite des Basisabschnitts angeordnet oder ausgebildet sein. Insbesondere münden der Druckluftanschluss und der wenigstens eine Unterdruckanschluss in die Unterseite ein. Eine solche Ausgestaltung ermöglicht es, die Spannvorrichtung von unten mit Druckluft und Unterdruck zu versorgen, insbesondere über eine mit der Spannvorrichtung zusammenwirkende Konsole (nachfolgend näher erläutert).

Es kann auch vorteilhaft sein, wenn nur der wenigstens eine Unterdruckanschluss an der Unterseite des Basisabschnitts angeordnet und ausgebildet ist. Der Druckluftanschluss kann dann beispielsweise seitlich an der Spannvorrichtung, insbesondere seitlich an dem Basisabschnitt, angeordnet sein.

Die eingangs genannte Aufgabe wird auch durch ein Spannsystem mit den Merkmalen des Anspruchs 8 gelöst. Das Spannsystem umfasst eine vorstehend beschriebene Spannvorrichtung und eine Konsole, auf welche die Spannvorrichtung aufsetzbar ist. Bei dem Spannsystem handelt es sich insgesamt um eine Vorrichtung im Sinne einer Sachgesamtheit von mehreren Einrichtungen, welche insbesondere zu einer Vorrichtung verbunden oder in einer übergeordneten Vorrichtung integriert sind.

Die Konsole weist ein sich entlang einer Konsolenlängsrichtung erstrecktes Konsolengehäuse auf. Das Konsolengehäuse weist eine Konsolenoberseite auf, auf welche die Spannvorrichtung mit ihrer Unterseite aufsetzbar ist. Insbesondere ist die Spannvorrichtung auf der Konsolenoberseite entlang der Konsolenlängsrichtung verschiebbar. Zu diesem Zweck kann das Konsolengehäuse eine Führungseinrichtung, z.B. Führungsnut, für die Spannvorrichtung aufweisen. Das Konsolengehäuse weist insbesondere außerdem zwei Konsolenlängsseiten auf, welche beispielhaft orthogonal zur Konsolenoberseite orientiert sind.

Die Konsole weist wenigstens einen Unterdruckkanal auf, insbesondere eine der Anzahl an Unterdruckanschlüssen der Spannvorrichtung entsprechende Anzahl an Unterdruckkanälen. Der wenigstens eine Unterdruckkanal ist vorzugsweise in das Konsolengehäuse integriert. Der wenigstens eine Unterdruckkanal weist an der (der Spannvorrichtung zugewandten) Konsolenoberseite wenigstens einen Unterdruckauslass zur Versorgung der Ventileinrichtung der Spannvorrichtung mit Unterdruck auf. Der Unterdruckauslass ist insbesondere zur Strömungsverbindung mit einem zugeordneten Unterdruckanschluss der Spannvorrichtung ausgebildet. Vorzugsweise weist jeder Unterdruckkanal eine Mehrzahl von Unterdruckauslässen auf, welche entlang der Konsolenlängsrichtung verteilt angeordnet sind. Dies ermöglicht es, die Spannvorrichtung in verschiedenen Positionen entlang der Konsolenlängsrichtung mit Unterdruck zu versorgen.

Im Rahmen einer vorteilhaften Weiterbildung weist die Konsole eine der Anzahl an Unterdruckanschlüssen an der Spannvorrichtung entsprechende Anzahl an Unterdruckkanälen auf, wobei jedem Unterdruckanschluss ein eigener Unterdruckkanal in der Konsole zugeordnet ist. Wie vorstehend erwähnt, korreliert eine Anzahl an Unterdruckanschlüssen der Spannvorrichtung vorzugsweise mit einer Anzahl von druckluftbetätigten Spannelementen und insbesondere mit einer Anzahl an unterdruckbetätigten Stellgliedern der Ventileinrichtung. Insofern kann die Konsole insbesondere eine der Anzahl an druckluftbetätigten Spannelementen entsprechende Anzahl an Unterdruckkanälen aufweisen, wobei jedem druckluftbetätigten Spannelement ein eigener Unterdruckkanal in der Konsole zugeordnet ist. Eine solche Ausgestaltung ermöglicht es, die Spannelemente auf einfache Weise voneinander unabhängig zu steuern. Beispielsweise ist es vorteilhaft, wenn bei der vorstehend beschriebenen Ausgestaltung mit erstem und zweitem druckluftbetätigten Spannelement ein erster Unterdruckkanal und ein, insbesondere von dem ersten Unterdruckkanal fluidisch getrennt, zweiter Unterdruckkanal in der Konsole vorgesehen sind.

Vorzugsweise sind die Spannvorrichtung und die Konsole, insbesondere Position und Anordnung der Unterdruckanschlüsse an der Spannvorrichtung und der Unterdruckauslässe an der Konsolenoberseite, derart ausgebildet und aufeinander abgestimmt, dass die Spannvorrichtung derart in einer Spannkonfiguration auf die Konsole aufsetzbar ist, dass ein jeweiliger Unterdruckanschluss der Spannvorrichtung mit dem Unterdruckauslass des ihm zugeordneten Unterdruckkanals in Strömungsverbindung steht, insbesondere fluchtet. In der Spannkonfiguration ist die Spannvorrichtung insofern insbesondere derart auf die Konsolenoberseite aufgesetzt, dass ein jeweiliger Unterdruckanschluss an der Spannvorrichtung mit einem Unterdruckauslass des ihm zugeordneten Unterdruckkanals in Strömungsverbindung steht, insbesondere fluchtet. Bei einer solchen Ausgestaltung muss die Spannvorrichtung insofern lediglich in der richtigen Position auf die Konsole aufgesetzt werden, um eine Unterdruckversorgung zu ermöglichen. Es ist jedoch insbesondere nicht erforderlich, die Spannvorrichtung mit Unterdruckschläuchen oder Leitungen zu verbinden.

Es ist denkbar, dass die Spannvorrichtung über einen Druckluftschlauch mit Druckluft versorgbar ist. Besonders vorteilhaft ist es jedoch, wenn die Konsole einen Druckluftkanal zur Versorgung der Spannvorrichtung mit Druckluft aufweist. Der Druckluftkanal kann insbesondere in das Konsolengehäuse integriert sein. Vorzugsweise erstreckt sich der Druckluftkanal entlang der Konsolenlängsrichtung.

Zur Versorgung der Spannvorrichtung mit Druckluft weist der Druckluftkanal vorzugsweise wenigstens einen Druckluftauslass auf. Der wenigstens eine Druckluftauslass ist insbesondere zur Strömungsverbindung mit dem Druckluftanschluss der Spannvorrichtung ausgebildet. Bei der beschriebenen Ausgestaltung sind insofern insbesondere keine Druckluftleitungen oder Schläuche erforderlich, um die Spannvorrichtung mit Druckluft zu versorgen, was eine Störkontur beim Einspannen reduziert. Darüber hinaus wird das Risiko minimiert, dass sich Druckluftschläuche beim Verschieben der Spannvorrichtung auf der Konsole verklemmen, was insbesondere für einen automatisierten Einsatz von Vorteil ist.

Der wenigstens eine Druckluftauslass kann an der Konsolenoberseite ausgebildet sein. Zusätzlich oder alternativ kann der Druckluftkanal an einer Konsolenlängsseite wenigstens einen Druckluftauslass aufweisen.

Vorzugsweise weist der Druckluftkanal eine Mehrzahl von Druckluftauslässen (an der Konsolenoberseite und/oder an der Konsolenlängsseite) auf, welche entlang der Konsolenlängsrichtung verteilt angeordnet sind. Dies ermöglicht es, die Spannvorrichtung in verschiedenen Positionen entlang der Konsolenlängsrichtung mit Druckluft zu versorgen (siehe unten).

Eine besonders vorteilhafte Ausgestaltung besteht darin, dass die Spannvorrichtung und die Konsole, insbesondere Position und Anordnung des Druckluftanschlusses an der Spannvorrichtung und des Druckluftauslasses an der Konsole, derart ausgebildet und aufeinander abgestimmt sind, dass dann, wenn die Spannvorrichtung in der vorstehend beschriebenen Spannkonfiguration auf die Konsole aufgesetzt ist, der Druckluftanschluss der Spannvorrichtung mit dem Druckluftauslass des Druckluftkanals bzw. einem der Druckluftauslässe des Druckluftkanals in Strömungsverbindung steht, insbesondere fluchtet. Insofern können die Spannvorrichtung und die Konsole derart ausgebildet sein, dass beim Aufsetzen der Spannvorrichtung in der Spannkonfiguration sowohl eine Strömungsverbindung zwischen Unterdruckanschluss und zugeordnetem Unterdruckkanal als auch eine Strömungsverbindung zwischen Druckluftanschluss und Druckluftkanal herstellt wird.

Um in einer Ausgangskonfiguration, in welcher die Spannvorrichtung nicht oder zumindest nicht in der Spannkonfiguration auf die Konsole aufgesetzt ist, eine Leckage von Druckluft zu vermeiden, kann es vorteilhaft sein, wenn der Druckluftauslass in dieser Ausgangskonfiguration verschlossen ist oder eine Strömungsverbindung zwischen dem Druckluftkanal und dem Druckluftauslass abgesperrt ist.

Eine mögliche Realisierungsform kann darin bestehen, dass die Konsole, insbesondere für jeden Druckluftauslass, ein Druckluftventil mit einem Dichtelement aufweist. Das Dichtelement kann insbesondere derart ausgebildet sein, dass es eine Dichtstellung und eine Freigabestellung einnehmen kann, wobei in der Dichtstellung der Druckluftauslass, insbesondere durch das Dichtelement, verschlossen ist oder eine Strömungsverbindung zwischen Druckluftkanal und Druckluftauslass abgesperrt ist und in der Freigabestellung der Druckluftauslass geöffnet ist oder eine Strömungsverbindung zwischen Druckluftkanal und Druckluftauslass freigegeben ist. Vorzugsweise befindet sich das Dichtelement in einer Ausgangskonfiguration des Spannsystems, in welcher die Spannvorrichtung nicht oder nicht in der Spannkonfiguration auf die Konsole aufgesetzt ist, in der Dichtstellung.

Im Rahmen einer vorteilhaften Weiterbildung können die Spannvorrichtung und der wenigstens eine Druckluftauslass bzw. das Druckluftventil derart zusammenwirken, dass durch Aufsetzen der Spannvorrichtung auf die Konsole in einer Spannkonfiguration, insbesondere der vorstehend beschriebenen Spannkonfiguration, der Druckluftauslass geöffnet wird oder eine Strömungsverbindung zwischen Druckluftkanal und Druckluftauslass freigegeben wird. Bei der vorgeschlagenen Ausgestaltung kann insofern durch Aufsetzen der Spannvorrichtung in der Spannkonfiguration eine Strömungsverbindung zwischen dem Druckluftkanal unter Spannvorrichtung hergestellt werden, insbesondere ohne, dass weitere Handgriffe erforderlich sind.

Bei einer Ausgestaltung mit Druckluftventil können die Spannvorrichtung und das Druckluftventil beispielsweise derart ausgebildet und aufeinander abgestimmt sein, dass durch Aufsetzen der Spannvorrichtung auf die Konsole in der Spannkonfiguration das Dichtelement aus der Dichtstellung in die Freigabestellung überführt wird. Beispielsweise ist es denkbar, dass die Spannvorrichtung ein mit dem Dichtelement zusammenwirkendes Betätigungselement aufweist.

Im Rahmen einer vorteilhaften Weiterbildung kann der Druckluftauslass oder das Druckluftventil derart ausgebildet sein, dass nur die vorstehend beschriebene Spannvorrichtung den Druckluftauslass öffnen kann, andere Vorrichtungen, welche optional ebenfalls mit der Konsole optional betrieben werden können (z.B. Blocksauger), den Druckluftauslass jedoch nicht öffnen können.

Wie vorstehend erwähnt, weist jeder Unterdruckkanal vorzugsweise eine Mehrzahl von entlang der Konsolenlängsrichtung voneinander beabstandeten Unterdruckauslässen auf. Darüber hinaus weist vorzugsweise auch der Druckluftkanal eine Mehrzahl von Druckluftauslässen auf, welche entlang der Konsolenlängsrichtung verteilt angeordnet sind. Vorzugsweise sind jeweils ein Unterdruckauslass pro Unterdruckkanal und ein Druckluftauslass des Druckluftkanals gruppiert angeordnet und bilden eine Auslassgruppe, welche sich über die Längserstreckung der Konsole, insbesondere mehrfach, wiederholt. Auf diese Weise ist es möglich, die Spannvorrichtung an verschiedenen Positionen entlang der Konsolenlängsrichtung mit Unterdruck und Druckluft zu versorgen. Es sind insofern mehrere Spannkonfigurationen möglich.

In diesem Zusammenhang ist es insbesondere vorteilhaft, wenn eine relative Anordnung des Druckluftauslasses und der Unterdruckauslässe einer Auslassgruppe einer relativen Anordnung des Druckluftanschlusses und der Unterdruckanschlüsse an der Spannvorrichtung entspricht.

Die eingangs genannte Aufgabe wird auch durch eine Konsole zur Verwendung in einem vorstehend beschriebenen Spannsystem gelöst. Die vorstehend im Zusammenhang mit der Spannvorrichtung und dem Spannsystem beschriebenen Vorteile und optionalen Merkmale können auch zur Ausgestaltung der Konsole dienen, sodass zur Vermeidung von Wiederholungen auf vorstehende Offenbarung hierzu verwiesen wird.

Die Erfindung wird im Folgenden anhand der Figuren näher erläutert. Es zeigen
- Figur 1: skizzierte Darstellung eines Spannsystems in einer perspektivischen Seitenansicht;
- Figur 2: skizzierte Darstellung der Spannvorrichtung des Spannsystems gemäß Fig. 1 in einer perspektivischen Seitenansicht;
- Figur 3: Schnittansicht durch die Spannvorrichtung gemäß Fig. 2;
- Figur 4: vereinfachte schematische Skizze zur Erläuterung der Funktionsweise der Ventileinrichtung der Spannvorrichtung gemäß Fig. 2;
- Figur 5: skizzierte Darstellung der Konsole des Spannsystems gemäß Fig. 1 in einer perspektivischen Seitenansicht;
- Figur 6: die Konsole gemäß Fig. 6 in einer Draufsicht;
- Figur 7: die Konsole gemäß Fig. 6 in einer Schnittansicht durch den Druckluftkanal; und
- Figur 8: skizzierte Darstellung einer weiteren Ausgestaltung der Konsole in einer perspektivischen Seitenansicht.

In der nachfolgenden Beschreibung sowie in den Figuren sind für identische oder einander entsprechende Merkmale jeweils dieselben Bezugszeichen verwendet.

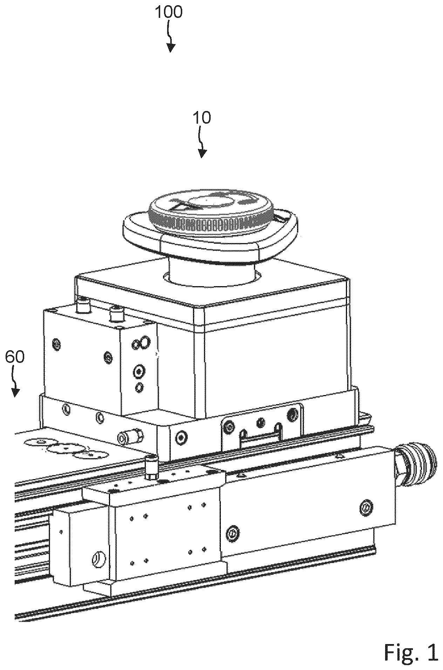

Die Figur 1 zeigt in skizzierter Darstellung eine Ausgestaltung eines Spannsystems, welches insgesamt mit dem Bezugszeichen 100 bezeichnet ist. Das Spannsystem 100 umfasst eine Spannvorrichtung 10 und eine Konsole 60.

Die Figur 1 zeigt dabei das Spannsystem 100 in einer Spannkonfiguration, in welcher die Spannvorrichtung 10 auf die Konsole 60 aufgesetzt ist. Wie nachfolgend noch im Detail erläutert, ist die Spannvorrichtung 10 über die Konsole 60 mit Betriebsfluiden, insbesondere Unterdruck und Druckluft, versorgbar und somit betreibbar.

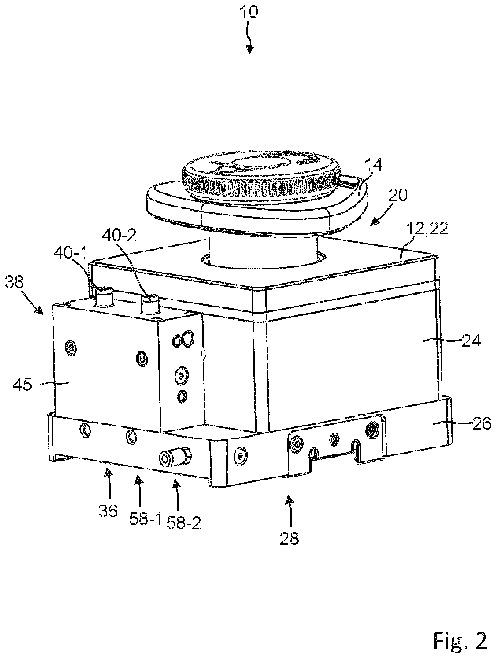

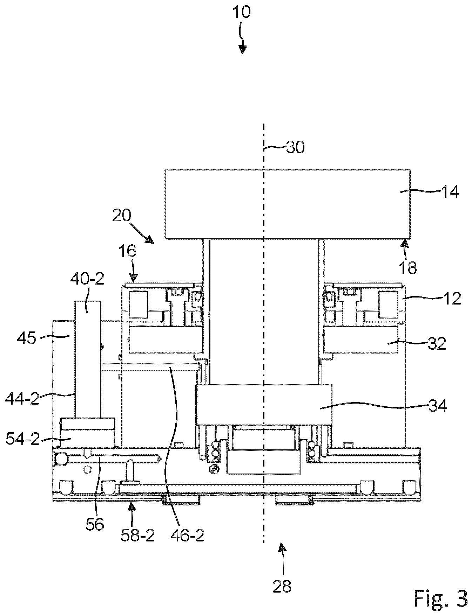

Die Figur 2 zeigt die Spannvorrichtung 10 in Alleinstellung. Die Spannvorrichtung 10 ist beispielhaft als so genannter "Vertikalspanner" ausgebildet, welcher ein erstes, unteres Spannelement 12 und ein zweites, oberes Spannelement 14 aufweist. Die Spannelemente 12 bzw. 14 weisen einander zugewandte Spannflächen 16 (erste Spannfläche) und 18 (zweite Spannfläche) auf (vgl. Fig. 3). Die Spannflächen 12, 14 sind beispielhaft eben ausgebildet und dienen dazu, einen in einen Spannzwischenraum 20 zwischen der ersten Spannfläche 16 und der zweiten Spannfläche 18 eingebrachtes Werkstück (nicht dargestellt) einzuklemmen.

Im Beispiel ist das erste Spannelement 12 als Deckelplatte 22 eines Basisteils 24 der Spannvorrichtung 10 ausgebildet. Wie nachfolgend noch im Detail erläutert, ist in dem Basisteil 24 beispielsweise ein Spannantrieb zum Verlagern der Spannelemente 12, 14 ausgebildet. Das Basisteil 24 weist einen Basisabschnitt 26 auf, mit dessen Unterseite 28 die Spannvorrichtung 10 auf die Konsole 60 aufsetzbar ist.

In den Figuren ist die Spannvorrichtung 10 in einer geöffneten Stellung dargestellt, in welche ein Werkstück zum Spannen in den Spannzwischenraum 20 eingebracht werden kann. Zum Spannen des Werkstücks sind das erste Spannelement 12 und das zweite Spannelement 14, vorzugsweise voneinander unabhängig, entlang einer Spannachse 30 verfahrbar (vgl. Fig. 3).

Hierzu umfasst jedes Spannelement 12, 14 einen Spannantrieb. Im konkreten Beispiel ist das erste Spannelement 12 über einen ersten Druckkolben 32 entlang der Spannachse 30 verfahrbar und das zweite Spannelement 14 ist über einen zweiten Druckkolben 34, unabhängig von dem ersten Spannelement 12, entlang der Spannachse 30 verfahrbar. Wie aus Figur 3 ersichtlich, sind die Druckkolben 32, 34 in dem Basisteil 24 (Gehäuse) angeordnet.

Zum Spannen des Werkstücks kann insbesondere das erste Spannelement 12 in Richtung zu dem zweiten Spannelement 14 verfahren werden und/oder das zweite Spannelement 14 in Richtung zu dem ersten Spannelement 12 verfahren werden, wodurch eine geschlossene Stellung der Spannvorrichtung 10 definiert ist.

In dem dargestellten Beispiel sind sowohl das erste Spannelement 12 als auch das zweite Spannelement 14 als druckluftbetätigt Spannelement ausgebildet. Bei nicht dargestellten Ausgestaltungen ist es auch denkbar, dass nur eines der beiden Spannelemente 12, 14 ein druckluftbetätigtes Spannelement ist und das andere Spannelement beispielsweise ein feststehendes Spannelement ist.

Zur Versorgung der Druckkolben 32, 34 mit Druckluft umfasst die Spannvorrichtung 10 einen Druckluftanschluss 36, welcher beispielhaft an der Unterseite 28 des Basisabschnitts 26 angeordnet ist. Wie nachfolgend noch im Detail erläutert, ist der Druckluftanschluss 36 dazu ausgebildet, um mit einem Druckluftauslass 78 an der Konsole 60 in der Spannkonfiguration zusammenzuwirken.

Die Spannvorrichtung 10 umfasst außerdem eine Ventileinrichtung 38 zum Steuern einer jeweiligen Strömungsverbindung von dem Druckluftanschluss 36 zu den Druckkolben 32, 34.

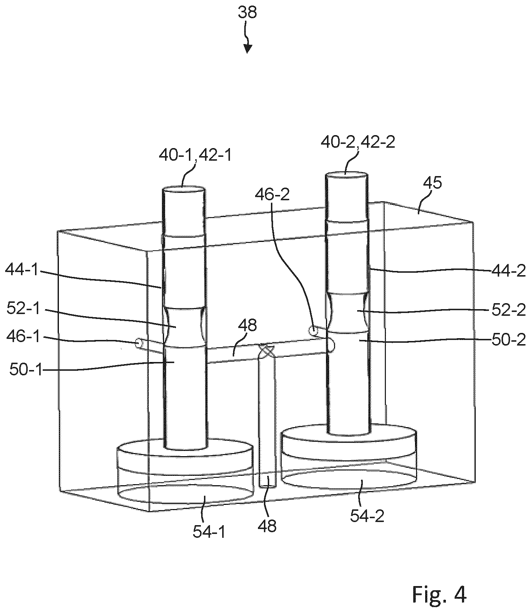

Eine beispielhafte Ausgestaltung der Ventileinrichtung 38 wird nachfolgend unter Bezugnahme auf die Figur 4 beschrieben. Wie vorstehend erwähnt, handelt es sich bei der Ventileinrichtung 38 um eine unterdruckbetätigte Ventileinrichtung.

Im konkreten Beispiel weist die Ventileinrichtung 38 ein erstes unterdruckbetätigtes Stellglied 40-1 auf, welches dazu ausgebildet ist, eine Strömungsverbindung zwischen dem Druckluftanschluss 36 und dem ersten Spannelement 12 bzw. dem Druckkolben 32 wahlweise freizugeben oder abzusperren. Die Ventileinrichtung weist außerdem ein zweites Stellglied 40-2 auf, welches dazu ausgebildet ist, eine Strömungsverbindung zwischen dem Druckluftanschluss 36 und dem zweiten Spannelement 14 bzw. dem Druckkolben 34 wahlweise freizugeben oder abzusperren.

Im konkreten Beispiel sind die Stellglieder 40-1, 40-2 jeweils als Ventilkolben 42-1, 42-2 ausgebildet, welche in einem jeweiligen Kolbenraum 44-1, 44-2 eines Ventilgehäuses 45 verschiebbar geführt sind. Wie in den Figuren 3 und 4 ersichtlich, ist jedes Spannelement 12, 14 bzw. jeder Druckkolben 32, 34 über ein eigenes Druckluftverteilersystem 46-1 (erstes Druckluftverteilersystem) bzw. 46-2 (zweites Druckluftverteilersystem) mit dem Kolbenraum 44-1, 44-2 des zugeordneten Stellglieds 40-1, 40-2 strömungsverbunden. Darüber hinaus ist der Druckluftanschluss 36 über einen Druckluftzufuhrkanal 48 mit den Kolbenräumen 44-1, 44-2 strömungsverbunden.

Die Figur 4 zeigt die Ventileinrichtung 38 in einer Sperrkonfiguration, in welcher sich beide Stellglieder 40-1, 40-2 in einer Sperrstellung befinden. In dieser Sperrstellung ist eine jeweilige Mündungsöffnung der Druckluftverteilersysteme 46-1, 46-2 in den entsprechenden Kolbenraum 44-1, 44-2 und eine Mündungsöffnung des Druckluftzufuhrkanals 48 in den entsprechenden Kolbenraum 44-1, 44-2 durch einen Sperrabschnitt 50-1, 50-2 des Ventilkolbens 42-1, 42-2 verschlossen, sodass eine Strömungsverbindung zwischen dem Druckluftanschluss 36 und den Druckluftverteilersystemen 46-1, 46-2 (und somit den Druckkolben 32, 34) unterbrochen ist.

Wie in Figur 4 gezeigt, sind die Ventilkolben 42-1, 42-2 in einem jeweiligen Freigabeabschnitt 52-1, 52-2 derart radial verjüngt, dass dann, wenn die Ventilkolben 42-1, 42-2 sich in einer Freigabestellung befinden (im Vergleich zu der in Figur 4 dargestellten Konfiguration nach unten verschoben), eine Strömungsverbindung zwischen dem jeweiligen Druckluftverteilersystem 46-1, 46-2 und dem Druckluftanschluss 36 bzw. Druckluftzufuhrkanal 48 hergestellt ist (Freigabekonfiguration) .

Wie vorstehend erwähnt, sind die Stellglieder 40-1, 40-2 unterdruckbetätigt. Die Stellglieder 40-1, 40-2 sind insofern derart ausgebildet, dass sie durch Anlegen eines Unterdrucks zwischen der Sperrstellung und der Freigabestellung verstellbar sind.

Im konkreten Beispiel weisen die Kolbenräume 44-1, 44-2 stirnseitig jeweils eine Unterdruckkammer 54-1, 54-2 auf, welche jeweils über einen Unterdruckzufuhranal 56 (in Fig. 3 nur für die zweite Unterdruckkammer 54-2 dargestellt) mit einem jeweiligen Unterdruckanschluss 58-1, 58-2 an der Unterseite 28 des Basisabschnitts 26 strömungsverbunden sind.

Wie nachfolgend noch im Detail erläutert, sind die Unterdruckanschlüsse 58-1, 58-2 derart an der Unterseite 28 angeordnet, dass sie dann, wenn die Spannvorrichtung 10 in der Spannkonfiguration auf die Konsole 60 aufgesetzt ist, mit entsprechenden Unterdruckauslässen 80-1, 80-2 an der Konsole 60 zusammenzuwirken.

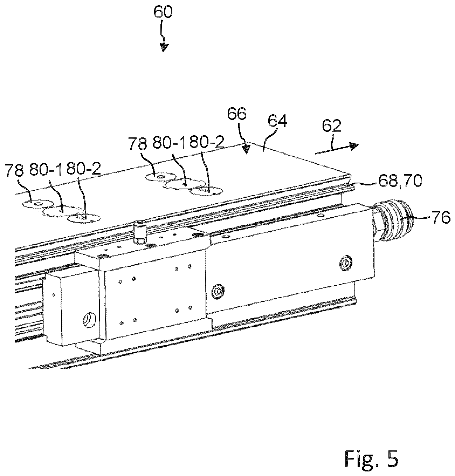

Eine beispielhafte Ausgestaltung der Konsole 60 wird nachfolgend unter Bezugnahme auf die Figuren 5 bis 7 näher beschrieben.

Wie aus Figur 5 ersichtlich, weist die Konsole 60 ein sich entlang einer Konsolenlängsrichtung 62 erstreckendes Konsolengehäuse 64 auf. Das Konsolengehäuse 64 kann beispielhaft als Strangpressprofil ausgebildet sein. Die Konsole 60 weist eine Konsolenoberseite 66 (Spannseite) auf, auf die die Spannvorrichtung 10 aufgesetzt und positioniert werden kann.

Die Konsole 60 weist beispielhaft außerdem eine Führungseinrichtung 68 zur Führung einer Verschiebebewegung der Spannvorrichtung 10 entlang der Konsolenlängsrichtung 62 auf. Beispielhaft kann die Führungseinrichtung 68 als Führungsnut 70 an dem Konsolengehäuse 64 ausgebildet sein (vgl. Fig. 5).

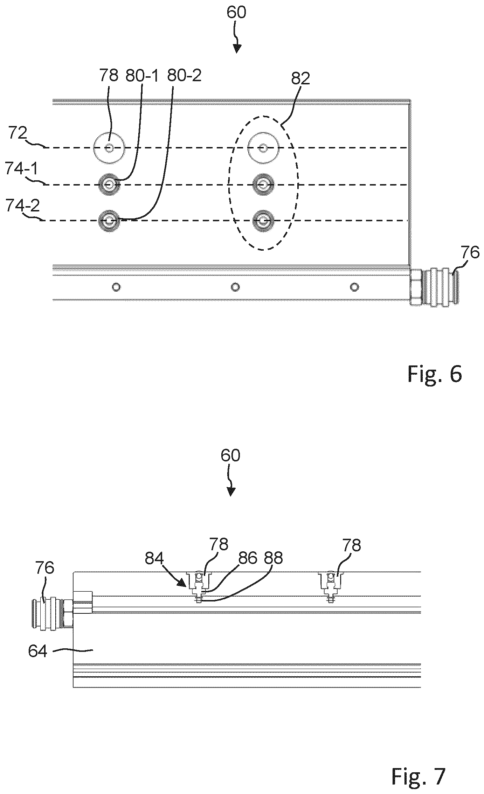

Wie vorstehend erwähnt, ist die Konsole 60 dazu ausgebildet, um die Spannvorrichtung 10 mit Druckluft (zur Betätigung der Spannelemente12, 14) und Unterdruck (zur Betätigung der Ventileinrichtung 38) zu versorgen. Zu diesem Zweck weist die Konsole 60 einen innenliegenden Druckluftkanal 72 sowie wenigstens einen, im Beispiel zwei, innenliegende Unterdruckkanäle 74-1 (erster Unterdruckkanal) bzw. 74-2 (zweiter Unterdruckkanal) auf (in Figur 6 durch Strichlinien angedeutet). Der Druckluftkanal 72 und die Unterdruckkanäle 74-1, 74-2 erstrecken sich beispielhaft und bevorzugt im Konsolengehäuse 64 entlang der Konsolenlängsrichtung 62.

Der Druckluftkanal 72 ist im Beispiel über eine Konsolen-Druckluftanschluss 76 mit Druckluft versorgbar.

Bei nicht dargestellten Ausgestaltungen ist es grundsätzlich auch denkbar, dass in der Konsole 60 lediglich Unterdruckkanäle 74-1, 74-2 vorgesehen sind und eine Druckluftversorgung der Spannvorrichtung 10 über eine mit der Spannvorrichtung 10 unmittelbar strömungsverbundene Druckluftleitung (Druckluftschlauch) erfolgt.

Beispielhaft und bevorzugt ist für jedes Stellglied 40-1, 40-2 bzw. für jeden Unterdruckanschluss 58-1, 58-2 an der Spannvorrichtung 10 ein eigener Unterdruckkanal 74-1, 74-2 in der Konsole 60 vorgesehen. Die beiden Unterdruckkanäle 74-1, 74-2 sind vorzugsweise fluidisch voneinander getrennt, sodass die Stellglieder 40-1, 40-2 voneinander unabhängig mit Unterdruck versorgbar und somit steuerbar sind.

Wie aus Figur 5 ersichtlich, weist der Druckluftkanal 72 an der Konsolenoberseite 66 eine Mehrzahl von Druckluftauslässen 78 auf, welche entlang der Konsolenlängsrichtung 62 in definiertem Abstand voneinander angeordnet sind. Ebenso weisen die Unterdruckkanäle 74-1, 74-2 jeweils entsprechende Unterdruckauslässe 80-1, 80-2 auf.

Jeweils ein Druckluftauslass 78 und jeweils ein Unterdruckauslass 80-1, 80-2 der jeweiligen Unterdruckkanäle 74-1, 74-2 bilden eine Auslassgruppe 82, welche sich entlang der Konsolenlängsrichtung 62, insbesondere mehrfach, wiederholt (vgl. Fig. 6). Die Position der Auslassgruppen 82 entlang der Konsolenlängsrichtung 62 definieren die Verschiebepositionen, an welchen die Spannvorrichtung 10 mit Betriebsfluiden versorgbar und somit zum Spannen einsetzbar ist (Spannkonfigurationen).

Die relative Anordnung Druckluftauslasses 78 und der Unterdruckauslässe 80-1, 80-2 einer Auslassgruppe 82 entspricht insbesondere einer relativen Anordnung des Druckluftanschlusses 36 und der Unterdruckanschlüsse 58-1, 58-2 an der Unterseite 26 der Spannvorrichtung 10, sodass dann, wenn die Spannvorrichtung 10 in einer der Spannkonfigurationen (vgl. bspw. Fig. 1) auf die Konsolenoberseite 66 aufgesetzt ist, der Druckluftanschluss 36 mit dem Druckluftauslass 78 in Strömungsverbindung steht und die Unterdruckanschlüsse 58-1, 58-2 jeweils mit einem Unterdruckauslass 80-1, 80-2 in Strömungsverbindung stehen.

Wie in Figur 7 dargestellt, ist jedem Druckluftauslass 78 vorzugsweise ein Druckluftventil 84 zugeordnet, welches dazu ausgebildet ist, den jeweiligen Druckluftauslass 78 in einer Ausgangskonfiguration, in welcher die Spannvorrichtung 10 nicht oder nicht in der Spannkonfiguration auf die Konsole 60 aufgesetzt ist, zu verschließen bzw. eine Strömungsverbindung zwischen dem Druckluftkanal 72 und dem Druckluftauslass 78 abzusperren.

Im konkreten Beispiel umfasst ein jeweiliges Druckluftventil 84 ein Dichtelement 86, welches zwischen einer in Figur 7 dargestellten Dichtstellung und einer (gegenüber der in Figur 7 dargestellten Dichtstellung nach unten verlagerten) Freigabestellung verlagerbar ist. Beispielhaft und bevorzugt ist das Dichtelement 86 in Dichtstellung beaufschlagt, beispielsweise durch die in Figur 7 dargestellte Feder 88.

Das Druckluftventil 84 ist derart ausgebildet, dass durch Aufsetzen der Spannvorrichtung 10 in der Spannkonfiguration (also dann, wenn der Druckluftanschluss 36 an der Unterseite 28 der Spannvorrichtung 10 mit dem Druckluftauslass 78 fluchtet) das Dichtelement 86 aus der Dichtstellung in die Freigabestellung überführt wird. Zu diesem Zweck kann an der Unterseite 28 der Spannvorrichtung 10 ein entsprechendes Betätigungselement (nicht dargestellt), beispielsweise ein Taststift, angeordnet sein.

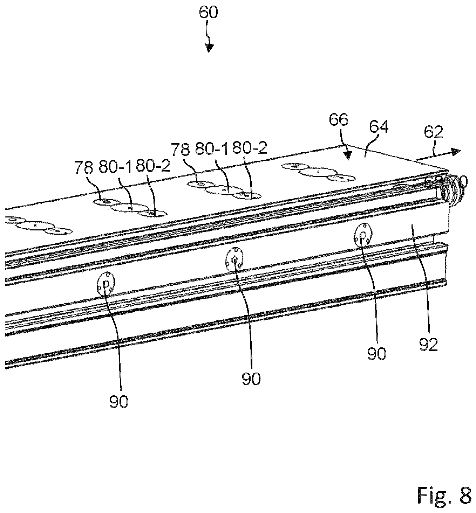

Die Figur 8 zeigt eine weitere Ausgestaltung einer Konsole 60, welche sich von der Ausgestaltung gemäß Figur 5 dadurch unterscheidet, dass der Druckluftkanal 72 zusätzlich zu den Druckluftauslässen 78 an der Konsolenoberseite 66 Druckluftauslässe 90 an einer Konsolenlängsseite 92 aufweist. Dies ermöglicht es, die Spannvorrichtung 10 zusätzlich oder alternativ zu einer Druckluftversorgung über die Druckluftauslässe 78 seitlich mit Druckluft zu versorgen. Zu diesem Zweck kann die Spannvorrichtung 10 zusätzlich oder alternativ zu dem Druckluftanschluss 36 an der Unterseite 28 einen seitlichen Druckluftanschluss (nicht dargestellt) aufweisen.

## Patentansprüche

1. Spannvorrichtung (10) zum Spannen eines Werkstücks, umfassend:
- wenigstens ein druckluftbetätigtes Spannelement (12, 14), welches zum Spannen des Werkstücks entlang einer Spannachse (30) verstellbar ist,
- einen Druckluftanschluss (36) zur Versorgung des wenigstens einen Spannelements (12, 14) mit Druckluft,
- eine unterdruckgesteuerte Ventileinrichtung (38), welche dazu ausgebildet ist, in Abhängigkeit eines an der Ventileinrichtung (38) anliegenden Unterdrucks eine Strömungsverbindung zwischen dem Druckluftanschluss (36) und dem wenigstens einen Spannelement (12, 14) wahlweise freizugeben oder abzusperren, und
- wenigstens einen Unterdruckanschluss (58-1, 58-2) zur Versorgung der Ventileinrichtung (38) mit Unterdruck.

2. Spannvorrichtung (10) nach Anspruch 1, wobei die Ventileinrichtung (38) wenigstens ein unterdruckbetätigtes Stellglied (40-1, 40-2) aufweist, welches zwischen einer die Strömungsverbindung zwischen Druckluftanschluss (36) und Spannelement (12, 14) absperrenden Sperrstellung und einer die Strömungsverbindung zwischen Druckluftanschluss (36) und Spannelement (12, 14) freigebenden Freigabestellung verstellbar ist, wobei das wenigstens eine Stellglied (40-1, 40-2) durch Beaufschlagung mittels Unterdruck aus der Sperrstellung in die Freigabestellung überführbar ist oder umgekehrt.

3. Spannvorrichtung (10) nach dem vorherigen Anspruch, wobei für jedes druckluftbetätigte Spannelement (12. 14) ein eigenes unterdruckbetätigtes Stellglied (40-2, 40-2) vorgesehen ist, insbesondere wobei jedes Stellglied über einen eigenen Unterdruckanschluss (58-1, 58-2) mit Unterdruck versorgbar ist.

4. Spannvorrichtung (10) nach einem der Ansprüche 2 oder 3, wobei das wenigstens eine Stellglied (40-1, 40-2) als Ventilkolben (42-1, 42-2) ausgebildet ist, welcher in einem Kolbenraum (44-1, 44-2) verschiebbar geführt ist, wobei der Kolbenraum (44-1, 44-2) über den wenigstens einen Unterdruckanschluss (58-1, 58-2) mit Unterdruck versorgbar ist.

5. Spannvorrichtung (10) nach einem der vorherigen Ansprüche, wobei die Spannvorrichtung ein erstes Spannelement (12) mit einer ersten Spannfläche (16) und ein zweites Spannelement (14) mit einer zweiten Spannfläche (18) aufweist, wobei die erste Spannfläche (16) und die zweite Spannfläche (18) einander zugewandt sind, wobei zum Spannen des Werkstücks das erste Spannelement (12) und/oder das zweite Spannelement (14) druckluftbetätigt entlang der Spannachse (30) verfahrbar sind, insbesondere voneinander unabhängig.

6. Spannvorrichtung (10) nach dem vorherigen Anspruch, wobei die Ventileinrichtung (38) dazu ausgebildet ist, eine Strömungsverbindung zwischen dem Druckluftanschluss (36) und dem ersten Spannelement (12) und eine Strömungsverbindung zwischen dem Druckluftanschluss (36) und dem zweiten Spannelement (14) voneinander unabhängig zu steuern.

7. Spannvorrichtung (10) nach einem der vorherigen Ansprüche, wobei die Spannvorrichtung (10) einen Basisabschnitt (26) aufweist, mit dessen Unterseite (28) die Spannvorrichtung (10) auf eine Konsole (60) eines Spannsystems (100) aufgesetzt werden kann, wobei der wenigstens eine Unterdruckanschluss (58-1, 58-2) an der Unterseite (28) des Basisabschnitts (26) angeordnet ist.

8. Spannsystem (100), umfassend
- eine Spannvorrichtung (10) gemäß einem der vorherigen Ansprüche, und
- eine Konsole (60) mit einem sich entlang einer Konsolenlängsrichtung (62) erstreckenden Konsolengehäuse (64), wobei das Konsolengehäuse (64) eine Konsolenoberseite (66) aufweist, auf welche die Spannvorrichtung (10) aufsetzbar ist und insbesondere entlang der Konsolenlängsrichtung (62) verschiebbar ist, wobei die Konsole (60) wenigstens einen, vorzugsweise in das Konsolengehäuse (64) integrierten, Unterdruckkanal (74-1, 74-2) aufweist, welcher an der Konsolenoberseite (66) einen Unterdruckauslass (80-1, 80-2) zur Versorgung der Ventileinrichtung (38) der Spannvorrichtung (10) mit Unterdruck aufweist.

9. Spannsystem (100) nach dem vorherigen Anspruch, wobei die Konsole (60) eine der Anzahl an Unterdruckanschlüssen (58-1, 58-2) an der Spannvorrichtung (10) entsprechende Anzahl an Unterdruckkanälen (74-1, 74-2) aufweist, wobei jedem Unterdruckanschluss (58-1, 58-2) ein eigener Unterdruckkanal (74-1, 74-2) in der Konsole (60) zugeordnet ist.

10. Spannsystem (100) nach dem vorherigen Anspruch, wobei die Spannvorrichtung (10) und die Konsole (60), insbesondere Position und Anordnung der Unterdruckanschlüsse (58-1, 58-2) und der Unterdruckauslässe (80-1, 80-2), derart ausgebildet und aufeinander abgestimmt sind, dass die Spannvorrichtung (10) in einer Spannkonfiguration auf die Konsole (60) aufsetzbar ist, in welcher ein jeweiliger Unterdruckanschluss (58-1, 58-2) der Spannvorrichtung (10) mit dem Unterdruckauslass (80-1, 80-2) des ihm zugeordneten Unterdruckkanals (74-1, 74-2) in Strömungsverbindung steht, insbesondere fluchtet.

11. Spannsystem (100) nach einem der Ansprüche 8 bis 10, wobei die Konsole (60) einen, insbesondere in das Konsolengehäuse (64) integrierten, Druckluftkanal (72) zur Versorgung der Spannvorrichtung (10) mit Druckluft aufweist, wobei der Druckluftkanal (72), insbesondere an der Konsolenoberseite (66) oder einer Konsolenlängsseite (92), einen Druckluftauslass (78, 90) zur Strömungsverbindung mit dem Druckluftanschluss (36) der Spannvorrichtung (10) aufweist.

12. Spannsystem (100) nach den Ansprüchen 10 und 11, wobei die Spannvorrichtung (10) und die Konsole (60), insbesondere Position und Anordnung des Druckluftanschlusses (36) und des Druckluftauslasses (78, 90), derart ausgebildet und aufeinander abgestimmt sind, dass dann, wenn die Spannvorrichtung (10) in der Spannkonfiguration auf die Konsole (60) aufgesetzt ist, der Druckluftanschluss (36) der Spannvorrichtung (10) mit dem Druckluftauslass (78, 90) des Druckluftkanals (72) in Strömungsverbindung steht, insbesondere fluchtet.

13. Spannsystem (100) nach einem der Ansprüche 11 oder 12, wobei in einer Ausgangskonfiguration, in welcher die Spannvorrichtung (10) nicht auf die Konsole (60) aufgesetzt ist, der Druckluftauslass (78, 90) verschlossen ist oder eine Strömungsverbindung zwischen Druckluftkanal (72) und Druckluftauslass (78, 90) abgesperrt ist.

14. Spannsystem (100) nach dem vorherigen Anspruch, wobei die Spannvorrichtung (10) und der Druckluftauslass (78, 90) derart ausgebildet sind, dass durch Aufsetzen der Spannvorrichtung (10) auf die Konsole (60) in der Spannkonfiguration der Druckluftauslass (78, 90) geöffnet wird oder eine Strömungsverbindung zwischen Druckluftkanal (72) und Druckluftauslass (78, 90) freigeben wird.

15. Spannsystem (100) nach einem der Ansprüche 11 bis 14, wobei die Konsole (60), insbesondere für jeden Druckluftauslass (78, 90), ein Druckluftventil (84) mit einem Dichtelement (86) aufweist, wobei das Dichtelement (86) eine Dichtstellung und eine Freigabestellung einnehmen kann, wobei in der Dichtstellung der Druckluftauslass (78) verschlossen ist oder eine Strömungsverbindung zwischen Druckluftkanal (72) und Druckluftauslass (78) absperrt ist und in der Freigabestellung der Druckluftauslass (78) geöffnet ist oder eine Strömungsverbindung zwischen Druckluftkanal (72) und Druckluftauslass (78, 90) freigegeben ist, wobei die Spannvorrichtung (10) und das Druckluftventil (4) derart ausgebildet und aufeinander abgestimmt sind, insbesondere die Spannvorrichtung (10) ein Betätigungselement derart aufweist, dass durch Aufsetzen der Spannvorrichtung (10) auf die Konsole (60) in der Spannkonfiguration das Dichtelement (86) aus der Dichtstellung in die Freigabestellung überführt wird.

16. Konsole (60) zur Verwendung in einem Spannsystem gemäß einem der Ansprüche 8 bis 15.
